# EUROPEAN PATENT SPECIFICATION

(11) **EP 3 748 879 B1**
(45) Date of publication and mention of the grant of the patent: **05.04.2023**
(21) Application number: 19178357.0
(22) Date of filing: 05.06.2019
(51) Int. Cl.: H04J 11/00, G01S 7/00, H04L 5/00, H04W 4/40

(54) **A V2X COMMUNICATION SYSTEM WITH RADAR FUNCTIONALITY**
V2X-KOMMUNIKATIONSSYSTEM MIT RADARFUNKTIONALITÄT
SYSTÈME DE COMMUNICATION V2X DOTÉ D'UNE FONCTIONNALITÉ DE RADAR

(43) Date of publication of application: 09.12.2020
(73) Proprietor: Veoneer Sweden AB, 447 83 Vårgårda (SE)
(72) Inventor: Rydström, Mats, 447 37 Vårgårda (SE); Herbertsson, Hans, 447 37 Vårgårda (SE); Eriksson, Olof, 447 37 Vårgårda (SE); Moss, Jonathan, 447 83 Vårgårda (SE)
(74) Representative: Westpatent AB

(56) References cited:
- WO-A1-2019/036578
- KOSLOWSKI SEBASTIAN ET AL: "Using filter bank multicarrier signals for radar imaging", 2014 IEEE/ION POSITION, LOCATION AND NAVIGATION SYMPOSIUM - PLANS 2014, IEEE, 5 May 2014 (2014-05-05), pages 152-157, XP032616475, DOI: 10.1109/PLANS.2014.6851369 [retrieved on 2014-07-09]
- CHRISTIAN STURM ET AL: "Waveform Design and Signal Processing Aspects for Fusion of Wireless Communications and Radar Sensing", PROCEEDINGS OF THE IEEE, IEEE. NEW YORK, US, vol. 99, no. 7, 1 July 2011 (2011-07-01), pages 1236-1259, XP011367583, ISSN: 0018-9219, DOI: 10.1109/JPROC.2011.2131110

## Description

The present disclosure relates to radio transceivers for use with vehicles in a vehicle to anything (V2X) communication system.

The third generation partnership project (3GPP) has been developing the Long Term Evolution (LTE) system for cellular communications between mobile terminals and fixed radio base stations (RBS) for some time.

LTE Sidelink, 3GPP TR 36.785 V14.0.0 2016-10, is an adaptation of the core LTE standard that allows direct communication between two LTE devices without going through an RBS (Radio Base Station). LTE Sidelink was defined as a standard which can be used for Public Safety communications. At the moment, public safety communications are often deployed using different standards in different geographical regions and may even vary within a country. This makes interworking of different public safety groups very difficult. The LTE Sidelink adaptation to the 3GPP standards can be used to increase safety in a traffic environment, e.g., by letting vehicles disseminate information and warning signals in the traffic environment. Applications comprise forward collision warning, electronic emergency brake light function, left turn assist, work zone warning, and the like.

"Using filter bank multicarrier signals for radar imaging" (KOSLOWSKI SEBASTIAN ET AL) discloses a study investigating advantages and drawbacks of a Filter-Bank Multi-Carrier (FBMC) radar in comparison to an Orthogonal Frequency Division Multiplexed (OFDM) radar, where both FBMC radar and OFDM radar can be capable of joint radar and communications operation.

WO 2019/036578 discloses different uses of the third generation partnership (3GPP) ProSe signaling protocols, also referred to as 3GPP sidelink. The disclosure focuses on selecting communications resources for sidelink communication based on geo-location information of the transceivers participating in the sidelink communication.

US 2018/0045832 A1 discusses methods and systems for such V2X applications.

However, V2X communication systems rely on that the communicating entities comprise communication transceivers supporting the communication standard. Road users which are not equipped with transceivers supporting the standard cannot be communicated with, which is a drawback since such road-users are left out of the vehicle safety system.

It is an object of the present disclosure to provide radio transceivers and methods which alleviate at least some of the above mentioned drawbacks.

This object is obtained by a radio transceiver for communicating with one or more transceiver equipped targets. The transceiver comprises a transmitter for transmitting radio signals in a transmit frequency band. The transmitter is arranged to transmit a data signal in case a transceiver equipped target is present and to transmit a dummy signal at least in case a transceiver equipped target is not present. The transceiver also comprises a receiver for receiving radio signals in a receive frequency band, and a detector for detecting backscattered radio signals in the transmit frequency band. The detector is also arranged to estimate a distance to at least one target object based on the backscattered radio signals.

This way the radio transceiver enables both communication and ranging when connected to one or more transceiver equipped targets, such as other vehicles. However, ranging capability is maintained by the dummy transmission even if a target object is not equipped with a transceiver, which is an advantage. Thus, road users which are not equipped with transceivers supporting radio communication with the radio transceiver are not left out of the vehicle safety system since they can be detected by backscattered radio signals.

According to aspects, the transmitter and the receiver are part of a third generation partnership, 3GPP, side-link communication system.

Thus, advantageously, a 3GPP side-link V2X system can be expanded to also provide ranging capability with respect to target objects that are outside of the LTE side-link system, i.e., which do not comprise radio transceivers having, e.g., LTE side-link compatible radio transceivers.

According to aspects, the transmitted radio frequency signals and the received radio frequency signals are orthogonal frequency division multiplex (OFDM) signals or single carrier frequency division multiplex (SC-FDM) signals.

Both OFDM and SC-FDM signals are suitable or use in ranging systems, where they can provide accurate and robust ranging in presence of interference, which is an advantage.

According to aspects, the radio transceiver is arranged to obtain a time-frequency resource assignment for transmission of the dummy signal from a central coordinating entity. This way system interference from the dummy transmissions is reduced since the transmissions of the dummy signal are coordinated transmissions.

According to aspects, the radio transceiver is configured to obtain resource blocks for transmitting radio signals in the transmit frequency band in dependence of a required radio detection and ranging (radar) performance. This way an efficient dynamic allocation of resource blocks, i.e., time-frequency communication resources, can be made depending on current requirements or requests by the participating radio transceivers. The required radar performance may, e.g., comprise an update rate, in which case the resource blocks are requested with a time spacing in dependence of the update rate. The required radar performance may also comprise a distance resolution, in which case the resource blocks can be requested as a total bandwidth in the transmit frequency band in dependence of the distance resolution.

According to aspects, the radio transceiver comprises a plurality of transmitters, receivers, and detectors configured with antennas having different main lobe pointing directions. The vehicle then functions as a sector antenna having multiple communication and ranging directions for more advanced operation.

According to aspects, the radio transceiver is arranged to associate a received radio signal in the receive frequency band with a detected backscattered radio signals in the transmit frequency band. This feature enables several interesting applications where the detected distance is associated with a received data transmission. For instance, an association between a remote radio transceiver identity and a detected range to a target object can be made, which is an advantage.

The object is also obtained by a vehicle comprising the radio transceiver discussed above. In particular, optionally, the radio transceiver may be arranged on a bottom section of the vehicle, i.e., in a region level with or below the headlights or in connection to a front grill of the vehicle. This way target objects like curbs and the like can be more easily detected based on the backscattered radio signals, which is an advantage.

There are also disclosed herein methods, uses of LTE side-link systems as radar systems, and computer program products associated with the above-mentioned advantages.

### BRIEF DESCRIPTION OF THE DRAWINGS

The present disclosure will now be described in more detail with reference to the appended drawings, where:
Figure 1 schematically illustrates a vehicle with a V2X transceiver and one or more on-board sensors;
Figures 2-3 schematically illustrate 3GPP side-link operation;
Figure 4 shows an example radio transceiver;
Figures 5-6 illustrate example radio transceiver use cases;
Figures 7-8 schematically illustrate vehicles;
Figure 9 is a flow chart illustrating methods;
Figure 10 shows an example control unit; and
Figure 11 shows an example computer program product.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

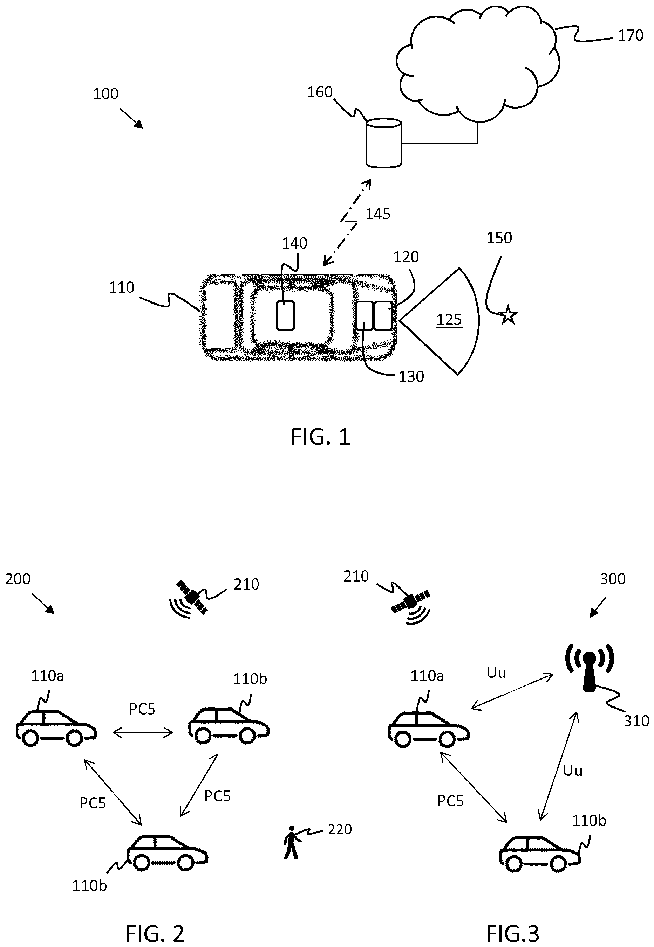

Figure 1 shows a vehicle 110 comprising a radio transceiver 130, i.e., a vehicle to vehicle (V2V), a vehicle to infrastructure (V2I) or a vehicle to anything (V2X) radio transceiver 130. The radio transceiver 130 is arranged to transmit and to receive radio signals that have been modulated in order to carry information to transceiver equipped targets adapted to receive the transmitted radio signals and to detect the information.

Herein, V2X communications are assumed to comprise any wireless communications comprising the vehicle 110. Thus, communications directly between vehicles, communications between the vehicle and the traffic infrastructure, and also cellular communications via a radio base station in a cellular network are comprised in V2X communications.

The vehicle may optionally comprise a sensor unit 120 associated with a field of view (FoV) 125. The sensor unit may, e.g., be a radar or lidar sensor which is arranged to detect objects 150 in the sensor field of view. In general, a vehicle may comprise a plurality of on-board sensors of different types having different and possibly overlapping fields of view. These sensors provide information about a surrounding environment of the ego vehicle 110.

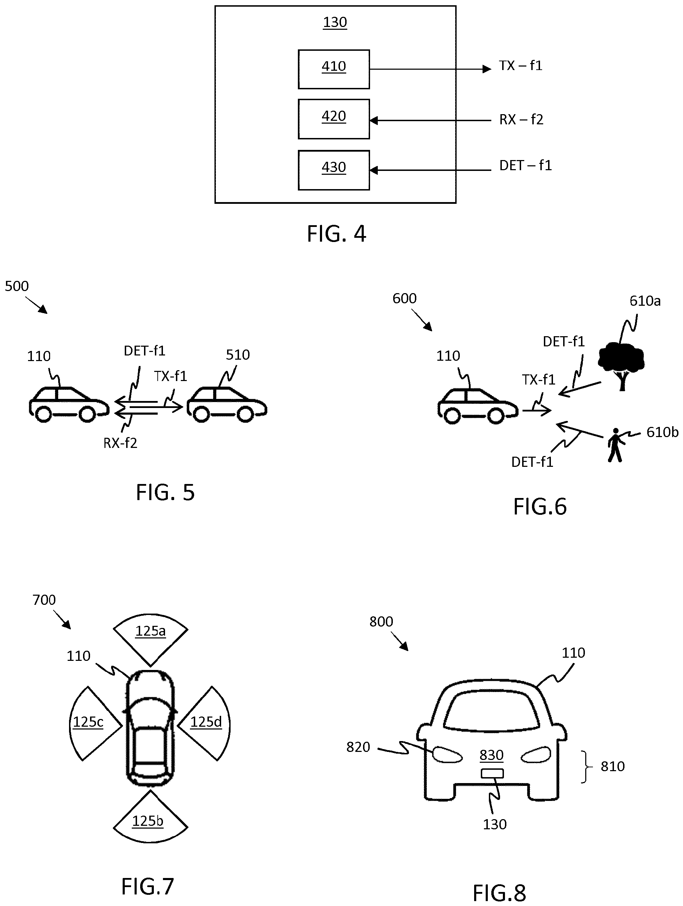

The radio transceiver 130 may also be configured to transmit and to receive radio signals in a field of view such as the field of view 125. This can for instance be accomplished by use of directive antennas, or by use of active antenna arrays which are arranged to generate a fixed narrow beam or a beam that can be steered in direction and/or in beam width. Radio transceiver transmission patterns will be further discussed below in connection to Figure 7.

An electronic control unit (ECU) 140 is arranged to process data obtained from the sensor unit 120 and from the communications transceiver 130. The ECU may further be arranged to provide an advanced driver assistance system (ADAS) or an autonomous vehicle control system, based on the data obtained from the sensor 120, and from the communications transceiver 130.

The vehicle 110 may furthermore be connected via V2X to an edge server 160 via wireless link 145. The edge server 160 is optionally connected to a cloud-based resource 170, which may comprise both computing resources, data storage, and administrative functions.

3GPP V2X communications are based on device-to-device (D2D) communications defined as part of ProSe services in 3GPP Release 12 and Release 13. The side-link communication interface, 3GPP TR 36.785 V14.0.0 2016-10, discussed above is also referred to as the PC5 interface when it is part of ProSe services. There are two high level deployment configurations currently defined for the 3GPP side-link operation;

Figure 2 illustrates a first such deployment configuration 200 where vehicles 110a, 110b, 110c are connected over the so-called PC5 interface, and where no RBS is part of resource assignment and coordination. This is a distributed medium access control set-up.

Figure 3 illustrates a second such deployment configuration 300 where an RBS 310 is part of the coordination and resource assignment. This is a centralized medium access control set-up.

Both configurations 200, 300 use a dedicated carrier for V2V communications, meaning that the frequency band is only used for PC5 based V2V communications. Also, in both cases a Global Navigation Satellite System (GNSS) 210 is used for time synchronization.

In the first deployment configuration 200, scheduling and interference management of V2V traffic is supported based on distributed algorithms implemented between the vehicles 110a, 110b, 110c. The distributed algorithm is based on sensing with semi-persistent transmission. Additionally, a mechanism where resource allocation is dependent on geographical information is introduced. Such a mechanism counters near far effect arising due to in-band emissions.

In the second deployment configuration 300, scheduling and interference management of V2V traffic is assisted by an RBS 310, or eNodeB, via control signaling over the Uu interface. The RBS 310 will assign the resources being used for V2V signaling in a dynamic manner.

Details of the operation in the first and second scenarios 200, 300 can be found in 3GPP TR 36.785 V14.0.0 2016-10 and other 3GPP documents relating to the side-link addition and the PC5 interface.

The vehicles 110a, 110b, 110c in Figures 2 and 3 are arranged to communicate with each other over the PC5 interface, and with the RBS 310 over the 3GPP Uu interface. However, the vehicles cannot communicate with road-users 220 that lack appropriate communication transceivers. Thus, both the presence and location of such road-users 220 are unknown.

However, as will be explained in the following, if the radio transceivers in the vehicle are also used as radar transceivers, then the road-user 220 can be detected and positioned relative to the vehicles.

In both scenarios 200 and 300, the vehicles 110a, 110b, 110c may exchange information with each other, such as information about vehicle identity and information about current and future control actions, e.g., braking and acceleration operations. The vehicles may also transmit position information obtained from, e.g., a GNSS positioning receiver on-board the vehicle. However, the GNSS positioning data may be associated with error, and it may therefore be difficult to associate transmitted data with a specific vehicle transmitter.

To better be able to associate received data with specific vehicles, it is proposed herein to also use the communication system as a radar transceiver. This association can, e.g., be at least partly based on detected and communicated vehicle velocity, as will be further discussed below.

Figure 4 shows a radio transceiver 130 for communicating with one or more transceiver equipped targets. The transceiver comprises a transmitter 410 for transmitting radio signals (TX) in a transmit frequency band f1. The transmitter is arranged to transmit a data signal in case a transceiver equipped target is present. Thus, the radio transceiver is arranged to transmit data to other radio transceivers in a vicinity of the radio transceiver 130.

The radio transceiver 130 is also arranged to transmit a dummy signal at least in case a transceiver equipped target is not present. Herein, a 'dummy' signal can be any radio signal. It can be some pre-determined data signal comprising, e.g., identification data, or it can be some randomly generated signal, for instance based on a pseudo-noise (PN) sequence generator. The purpose of the dummy signal is to keep the transmission ongoing even if there is no-one around to hear the transmitted signal. Thus, the transceiver 130 maintains transmission at all times similar to a radar transceiver. The transmission may be the data signal, the dummy signal, or a combination of data and dummy signal.

With reference also to Figure 3, according to some aspects, the radio transceiver 130 may be arranged to obtain a time-frequency resource assignment for transmission of the dummy signal from a central coordinating entity, such as the RBS 310. The time frequency resource may be a time-frequency resource block in a 3GPP side-link system. This way transmissions can be coordinated, which reduces interference in the system.

The radio transceiver 130 also comprises a receiver 420 for receiving radio signals RX in a receive frequency band f2. Thus, the radio transceiver 130 is adapted to receive radio transmissions from other radio transceivers in a vicinity of the radio transceiver 130. Together with the transmitter 410, the receiver forms a two-way communication system for use in vehicular environments, i.e., a V2V, V2I, or V2X communication system. According to some aspects, the transmitter 410 and the receiver 420 are part of a third generation partnership, 3GPP, side-link communication system. The 3GPP side-link system is defined at least in part in 3GPP TR 36.785 V14.0.0 2016-10. Also, the RBS 310 illustrated in Figure 3 may be a 3GPP eNodeB radio base station compliant with one or more 3GPP specifications.

According to some aspects, the transmitted radio frequency signals TX-f1 and the received radio frequency signals RX-f2 are orthogonal frequency division multiplex (OFDM) signals. For instance, the transmitted radio frequency signals TX-f1 and the received radio frequency signals RX-f2 may optionally be implemented as single carrier frequency division multiplex (SC-FDM) signals.

Notably, the radio transceiver 130 further comprises a detector 430 for detecting backscattered radio signals (DET) in the transmit frequency band f1. The detector is arranged to estimate a distance to at least one target object based on the backscattered radio signals DET. This detector can, according to some aspects, be seen as a radio detection and ranging (RADAR) detector that operates based on the transmitted radio signals from the transmitter 410. So, even if a target does not comprise a radio transceiver configured to communicate with the radio transceiver 130, the target can be detected by means of the generated backscatter.

Consequently, there is disclosed herein use of a 3GPP sidelink transceiver, e.g., based on the specification in 3GPP TR 36.785 V14.0.0 2016-10, for radar operation.

The receiver 420 and the detector 430 may use the same radio front-end, or they may use separate radio front ends.

The detector may operate according to the detector principles described by M. Braun in "OFDM Radar Algorithms in Mobile Communication Networks", Institut fur Nachrichtentechnik (CEL), Karlsruher Institut fur Technologie (KIT), Band 31, ISSN 1433-3821, 2014. The detector 430 may also operate according to some other known radar detection principle.

Figure 5 illustrates one example 500 of a scenario where a vehicle 110 uses the radio transceiver 130 to communicate with a target object. The target object is a transceiver-equipped target 510, which means that it can receive and respond to radio transmission from the radio transceiver 130. However, in addition to the response signals received via the radio receiver 420, the target 510 also generates radio signal reflections or backscatter, i.e., reflected radio signals DET in the first frequency band f1. The vehicle 110 can therefore determine a distance and potentially also a relative velocity of the target object 510 using the detector 430 based on known radar detection principles.

Figure 6 illustrates another scenario 600 where the vehicle 110 is not in the vicinity of any other radio transceivers arranged to communicate over the first f1 and second f2 frequency bands. There are two target objects 610a, 610b which are generating backscattered radio signals DET in the first frequency band f1. Thus, by means of the detector 430, the vehicle 110 may estimate distances to the target objects and optionally also relative velocities, based on the received backscattered radio signals.

The performance of the radar system disclosed herein depends on the amount of time-frequency resources assigned to the radio transceiver, i.e., how much time the radio transceiver is allowed to occupy some frequency sub-bands within the first frequency band. The radar performance requirements may change depending on scenario. For instance, some scenarios require large range capability such that far away and/or small radar cross-section objects can be detected. Other scenarios may require high distance resolution, such that objects close to each other can be separated from each other.

The current radar performance can be adapted, according to some aspects, if the radio transceiver 130 is configured to obtain resource blocks for transmitting radio signals in the transmit frequency band f1 in dependence of a required radar performance.

The obtaining of resource blocks for transmitting radio signals in the transmit frequency band f1, even if the radio signals are dummy signals, is in analogy to the dynamic scheduling of terminals in, e.g., 3GPP cellular networks, where terminals can be assigned transmission resources based on requests. There, a terminal will request transmission resources in dependence of the amount of data to be transmitted and perhaps also of delay requirements for the data. Here, the radio transceiver 130 will request resources also at least partly based on current radar performance requirements.

For instance, the required radar performance may optionally comprise an update rate, and the resource blocks may be requested with a time spacing in dependence of the update rate. Also, the required radar performance may optionally comprise a distance resolution, and the resource blocks may be requested with a total bandwidth in the transmit frequency band f1 in dependence of the distance resolution.

According to aspects, the radio transceiver 130 comprises a plurality of transmitters, receivers, and detectors configured with antennas having different main lobe pointing directions and different fields of view 125a, 125b, 125c, 125d. An example deployment 700 of this type of radio transceiver is shown in Figure 7.

The association problem was briefly mentioned above. This problem relates to associating a detected target (detected by the detector 430 based on backscatter) with a received V2X transmission (received via the receiver 420). According to some aspects, the radio transceiver 130 is arranged to associate a received radio signal RX in the receive frequency band f2 with a detected backscattered radio signals DET in the transmit frequency band f1.

The association may optionally be based on a method in the radio transceiver 130 for associating a received V2X transmission with one or more radar detections. The method comprises receiving the V2X transmission by the receiver 420. The V2X transmission comprises vehicle data related to a target object, such as the velocity of the target object. The method also comprises obtaining data from the detector 430, i.e., radar detections determined based on backscattered radio signals in the first frequency band. The method further comprises comparing the received vehicle data to the radar detections and associating at least one of the radar detections with the V2X transmission based on the comparison between radar detections and the vehicle data.

According to aspects, the vehicle data comprises vehicle velocity and/or acceleration data obtained from, e.g., a GNSS system, and the radar detection data comprises radar detection velocity and/or acceleration obtained from, e.g., Doppler data. Data indicating a given object velocity may be associated with a V2X transmission comprising data indicating a similar velocity. Also, a measure of accuracy may be transmitted along with the velocity data, which allows a signal processing system to approximate a likelihood or probability that a given sensor detection actually corresponds to a certain V2X transmission. Thus, a 3GPP side-link transmission received by the received 420 can be associated with a radar detection detected by the detector 430.

In general, if there is a radar detection which resembles (in terms of velocity or other characteristics) at least part of the data in the V2X transmission in some way, then this detection is likely to be related to the V2X transmission. This allows, e.g., an ego vehicle 110 to make more informed decisions based on the received V2X transmissions, since the overall available data has been improved.

For instance, suppose the vehicle 110 receives two V2X transmissions from two different sources and also makes three radar detections by the detector 430. Suppose further that one of these radar detections is located in the same lane and in front of the vehicle 110, while the other two detections are located in other lanes more far away. In case a received V2X transmission comprises an emergency brake notification, the vehicle can check to see if that V2X transmission is associated with the radar detection in front of the ego vehicle, or if it is associated with the radar detections in the other lanes more far away. An emergency maneuver may then only be required if the V2X transmission is actually associated with the radar detection in front of the vehicle, regardless of if the transmission comprises location information placing the V2X source vehicle in front of the ego vehicle 110.

Some types of information are more easily obtained via V2X transmission compared to inferring the same from radar detections. For instance, if a communication link is established between two vehicles via V2X such as 3GPP side-link, then accurate information about, e.g., vehicle data such as vehicle size, weight, brake pedal state, acceleration capability and the like can be directly communicated between vehicles instead of estimated based on sensor signals such as radar and lidar sensor input. In fact, some types of vehicle information, such as future intended maneuvering, are impossible to infer from sensor input signals.

According to aspects, the vehicle data also comprises vehicle heading, and the radar data comprises target detection heading. The vehicle heading may be obtained from, e.g., a compass. Radar detection heading may be obtained from, e.g., a tracking system comprised in the vehicle 110.

According to aspects, the vehicle data comprises vehicle type, and the radar data comprises a measure of cross-section area, size, or volume. If the V2X transmission says that the transmitter is arranged in connection to a large vehicle, such as a truck or the like, and the radar detection data indicates a large object, then the association is more likely than if the radar data clearly indicates a smaller object, like that obtained from a motorcycle or the like. Consequently, vehicle type data can be used as input when associating radar detections to V2X transmissions, thereby obtaining a more robust determining of sensor data to vehicle data association.

Figure 8 shows a vehicle 110 comprising the radio transceiver 130 discussed above.

Advantageously, the radio transceiver 130 may be arranged on a bottom section 810 of the vehicle 110, i.e., in a region level with or below the headlights 820 or front grill 830 of the vehicle 110. This way target objects like curbs and the like can be more easily detected based on the backscattered radio signals.

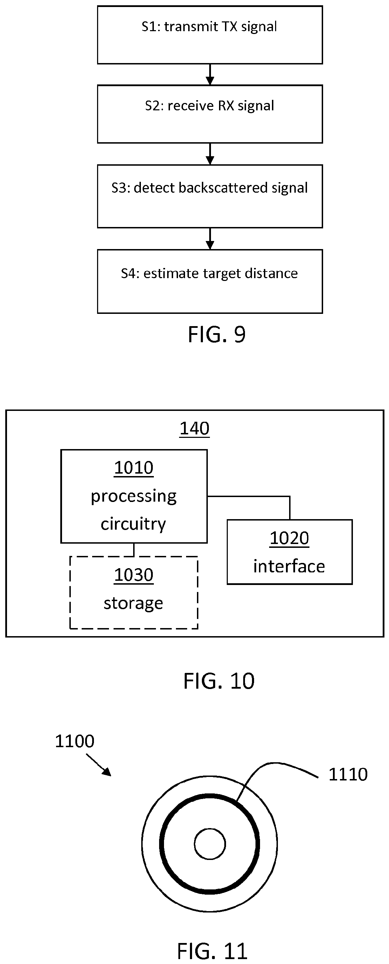

Figure 9 is a flow chart illustrating methods in a radio transceiver 130 for communicating with one or more transceiver equipped targets 510, and which summarize the discussions above. The method comprises transmitting S1 radio signals TX in a transmit frequency band f1, wherein the transmitting comprises transmitting a data signal in case a transceiver equipped target 510 is present and transmitting a dummy signal in case a transceiver equipped target 510 is not present,
receiving S2 radio signals RX in a receive frequency band f2,
detecting S3 backscattered radio signals DET in the transmit frequency band f1, and
estimating S4 a distance to at least one target object 510, 610 based on the detected backscattered radio signals DET.

Figure 10 schematically illustrates, in terms of a number of functional units, the components of a radio transceiver 130 according to an embodiment of the discussions herein. Processing circuitry 1010 is provided using any combination of one or more of a suitable central processing unit CPU, multiprocessor, microcontroller, digital signal processor DSP, etc., capable of executing software instructions stored in a computer program product, e.g. in the form of a storage medium 1030. The processing circuitry 1010 may further be provided as at least one application specific integrated circuit ASIC, or field programmable gate array FPGA. The processing circuitry thus comprises a plurality of digital logic components.

Particularly, the processing circuitry 1010 is configured to cause the system 130 to perform a set of operations, or steps. For example, the storage medium 1030 may store the set of operations, and the processing circuitry 1010 may be configured to retrieve the set of operations from the storage medium 1030 to cause the system 130 to perform the set of operations. The set of operations may be provided as a set of executable instructions. Thus, the processing circuitry 1010 is thereby arranged to execute methods as herein disclosed.

The storage medium 1030 may also comprise persistent storage, which, for example, can be any single one or combination of magnetic memory, optical memory, solid state memory or even remotely mounted memory.

The sensor signal processing system 130 further comprises an interface 1020 for communications with at least one external device. As such the interface 1020 may comprise one or more transmitters and receivers, comprising analogue and digital components and a suitable number of ports for wireline communication.

The processing circuitry 1010 controls the general operation of the system 130, e.g. by sending data and control signals to the interface 1020 and the storage medium 1030, by receiving data and reports from the interface 1020, and by retrieving data and instructions from the storage medium 1030. Other components, as well as the related functionality, of the control node are omitted in order not to obscure the concepts presented herein.

Figure 11 shows a computer program product 1100 comprising computer executable instructions 1110 to execute any of the methods disclosed herein.

## Claims

1. A radio transceiver (130) for communicating with one or more transceiver equipped targets (510), the transceiver comprising;
a transmitter (410) for transmitting radio signals (TX) in a transmit frequency band (f1), wherein the transmitter is arranged to transmit a data signal in case a transceiver equipped target (510) is present and to transmit a dummy signal at least in case a transceiver equipped target (510) is not present,
a receiver (420) for receiving radio signals (RX) in a receive frequency band (f2), and
a detector (430) for detecting backscattered radio signals (DET) in the transmit frequency band (f1), wherein the detector is arranged to estimate a distance to at least one target object (510, 610) based on the backscattered radio signals (DET).

2. The radio transceiver (130) according to claim 1, wherein the transmitter (410) and the receiver (420) are part of a third generation partnership, 3GPP, side-link communication system.

3. The radio transceiver (130) according to any previous claim, wherein the transmitted radio frequency signals (TX) and the received radio frequency signals (RX) are orthogonal frequency division multiplex, OFDM, signals.

4. The radio transceiver (130) according to any previous claim, wherein the transmitted radio frequency signals (TX) and the received radio frequency signals (RX) are single carrier frequency division multiplex, SC-FDM, signals.

5. The radio transceiver (130) according to any previous claim, arranged to obtain a time-frequency resource assignment for transmission of the dummy signal from a central coordinating entity (310).

6. The radio transceiver (130) according to any previous claim, configured to obtain resource blocks for transmitting radio signals (TX) in the transmit frequency band (f1) in dependence of a required radar performance.

7. The radio transceiver (130) according to claim 6, wherein the required radar performance comprises an update rate, and wherein the resource blocks are requested with a time spacing in dependence of the update rate.

8. The radio transceiver (130) according to claim 6 or 7, wherein the required radar performance comprises a distance resolution, and wherein the resource blocks are requested with a total bandwidth in the transmit frequency band (f1) in dependence of the distance resolution.

9. The radio transceiver (130) according to any previous claim, comprising a plurality of transmitters, receivers, and detectors configured with antennas having different main lobe pointing directions.

10. The radio transceiver (130) according to any previous claim, arranged to associate a received radio signal (RX) in the receive frequency band (f2) with a detected backscattered radio signals (DET) in the transmit frequency band (f1).

11. A vehicle (110) comprising the radio transceiver (130) according to any previous claim.

12. The vehicle according to claim 11, wherein the radio transceiver (130) is arranged on a bottom section (810) of the vehicle (110).

13. A method in a radio transceiver (130) for communicating with one or more transceiver equipped targets (510), the method comprising;
transmitting (S1) radio signals (TX) in a transmit frequency band (f1), wherein the transmitting comprises transmitting a data signal in case a transceiver equipped target (510) is present and transmitting a dummy signal in case a transceiver equipped target (510) is not present,
receiving (S2) radio signals (RX) in a receive frequency band (f2),
detecting (S3) backscattered radio signals (DET) in the transmit frequency band (f1), and
estimating (S4) a distance to at least one target object (510, 610) based on the detected backscattered radio signals (DET).

14. A computer program product (1100) comprising program code (1110) for performing the steps of claim 13 when said program is run on a computer.

## Patentansprüche

1. Funksendeempfänger (130) zum Kommunizieren mit einem oder mehreren sendeempfängerausgestatteten Zielen (510), der Sendeempfänger umfassend;
einen Sender (410) zum Senden von Funksignalen (TX) in einem Sendefrequenzband (f1), wobei der Sender angeordnet ist, um ein Datensignal in dem Fall, dass ein sendeempfängerausgestattetes Ziel (510) vorhanden ist, zu senden, und um ein Dummy-Signal mindestens in dem Fall, dass ein sendeempfängerausgestattetes Ziel (510) nicht vorhanden ist, zu senden,
einen Empfänger (420) zum Empfangen von Funksignalen (RX) in einem Empfangsfrequenzband (f2) und
einen Detektor (430) zum Erfassen von rückgestreuten Funksignalen (DET) in dem Sendefrequenzband (f1), wobei der Detektor angeordnet ist, um eine Distanz zu mindestens einem Zielobjekt (510, 610) basierend auf den rückgestreuten Funksignalen (DET) zu schätzen.

2. Funksendeempfänger (130) nach Anspruch 1, wobei der Sender (410) und der Empfänger (420) Teil eines Sidelink-Kommunikationssystems einer Partnerschaft der dritten Generation (3GPP-Sidelink-Kommunikationssystem) sind.

3. Funksendeempfänger (130) nach einem der vorstehenden Ansprüche, wobei die gesendeten Hochfrequenzsignale (TX) und die empfangenen Hochfrequenzsignale (RX) orthogonale Frequenzmultiplexsignale (OFDM-Signale) sind.

4. Funksendeempfänger (130) nach einem der vorstehenden Ansprüche, wobei die gesendeten Hochfrequenzsignale (TX) und die empfangenen Hochfrequenzsignale (RX) Einzelträgerfrequenzmultiplexsignale (SC-FDM-Signale) sind.

5. Funksendeempfänger (130) nach einem der vorstehenden Ansprüche, der angeordnet ist, um eine Zeit-Frequenz-Ressourcenzuweisung zum Senden des Dummy-Signals von einer zentralen koordinierenden Einheit (310) zu erhalten.

6. Funksendeempfänger (130) nach einem der vorstehenden Ansprüche, der konfiguriert ist, um Ressourcenblöcke zum Senden von Funksignalen (TX) in dem Sendefrequenzband (f1) in Abhängigkeit von einer erforderlichen Radarleistung zu erhalten.

7. Funksendeempfänger (130) nach Anspruch 6, wobei die erforderliche Radarleistung eine Aktualisierungsrate umfasst, und wobei die Ressourcenblöcke mit einem Zeitabstand in Abhängigkeit von der Aktualisierungsrate angefordert werden.

8. Funksendeempfänger (130) nach Anspruch 6 oder 7, wobei die erforderliche Radarleistung eine Distanzauflösung umfasst, und wobei die Ressourcenblöcke mit einer Gesamtbandbreite in dem Sendefrequenzband (f1) in Abhängigkeit von der Abstandsauflösung angefordert werden.

9. Funksendeempfänger (130) nach einem der vorstehenden Ansprüche, umfassend eine Vielzahl von Sendern, Empfängern und Detektoren, die mit Antennen konfiguriert sind, die unterschiedliche Hauptkeulenrichtungsanzeigen aufweisen.

10. Funksendeempfänger (130) nach einem der vorstehenden Ansprüche, der angeordnet ist, um ein empfangenes Funksignal (RX) in dem Empfangsfrequenzband (f2) mit erfassten rückgestreuten Funksignalen (DET) in dem Sendefrequenzband (f1) zu verknüpfen.

11. Fahrzeug (110), umfassend den Funksendeempfänger(130) nach einem der vorstehenden Ansprüche.

12. Fahrzeug nach Anspruch 11, wobei der Funksendeempfänger (130) auf einem unteren Bereich (810) des Fahrzeugs (110) angeordnet ist.

13. Verfahren in einem Funksendeempfänger (130) zum Kommunizieren mit einem oder mehreren sendeempfängerausgestatteten Zielen (510), das Verfahren umfassend;
Senden (S1) von Funksignalen (TX) in einem Sendefrequenzband (f1), wobei das Senden das Senden eines Datensignals in dem Fall, dass ein sendeempfängerausgestattetes Ziel (510) vorhanden ist, und das Senden eines Dummy-Signals in dem Fall, dass ein sendeempfängerausgestattetes Ziel (510) nicht vorhanden ist, umfasst,
Empfangen (S2) von Funksignalen (RX) in einem Empfangsfrequenzband (f2),
Erfassen (S3) von rückgestreuten Funksignalen (DET) in dem Sendefrequenzband (f1), und
Schätzen (S4) einer Distanz zu mindestens einem Zielobjekt (510, 610) basierend auf den erfassten rückgestreuten Funksignalen (DET).

14. Computerprogrammprodukt (1100), umfassend einen Programmcode (1110) zum Durchführen der Schritte nach Anspruch 13, wenn das Programm auf einem Computer ausgeführt wird.

## Revendications

1. Émetteur-récepteur radio (130) pour communiquer avec une ou plusieurs cibles équipées d'émetteur-récepteur (510), l'émetteur-récepteur comprenant ;
un émetteur (410) pour transmettre des signaux radio (TX) dans une bande de fréquences de transmission (f1), l'émetteur étant agencé pour transmettre un signal de données dans le cas où une cible équipée d'un émetteur-récepteur (510) est présente et pour transmettre un signal factice au moins dans le cas où une cible équipée d'un émetteur-récepteur (510) n'est pas présente,
un récepteur (420) pour recevoir des signaux radio (RX) dans une bande de fréquences de réception (f2), et
un détecteur (430) pour détecter des signaux radio rétro-diffusés (DET) dans la bande de fréquences de transmission (f1), le détecteur étant agencé pour estimer une distance à au moins un objet cible (510, 610) sur la base des signaux radio rétro-diffusés (DET).

2. Émetteur-récepteur radio (130) selon la revendication 1, dans lequel l'émetteur (410) et le récepteur (420) font partie d'un système de communication de liaison latérale de partenariat de troisième génération, 3GPP.

3. Émetteur-récepteur radio (130) selon l'une quelconque des revendications précédentes, dans lequel les signaux de radiofréquence transmis (TX) et les signaux de radiofréquence reçus (RX) sont des signaux de multiplexage par répartition orthogonale de la fréquence, OFDM.

4. Émetteur-récepteur radio (130) selon l'une quelconque des revendications précédentes, dans lequel les signaux de radiofréquence transmis (TX) et les signaux de radiofréquence reçus (RX) sont des signaux de multiplexage par répartition en fréquence à porteuse unique, SC-FDM.

5. Émetteur-récepteur radio (130) selon l'une quelconque des revendications précédentes, agencé pour obtenir une attribution de ressources temps-fréquence pour la transmission du signal factice à partir d'une entité de coordination centrale (310).

6. Émetteur-récepteur radio (130) selon l'une quelconque revendication précédente, configuré pour obtenir des blocs de ressource pour transmettre des signaux radio (TX) dans la bande de fréquence de transmission (f1) en fonction d'une performance radar requise.

7. Émetteur-récepteur radio (130) selon la revendication 6, dans lequel la performance radar requise comprend une fréquence de mise à jour, et les blocs de ressource étant demandés avec un espacement de temps en fonction de la fréquence de mise à jour.

8. Émetteur-récepteur radio (130) selon la revendication 6 ou 7, dans lequel la performance radar requise comprend une résolution de distance, et les blocs de ressource étant demandés avec une largeur de bande totale dans la bande de fréquence de transmission (f1) en fonction de la résolution de distance.

9. Émetteur-récepteur radio (130) selon l'une quelconque des revendications précédentes, comprenant une pluralité d'émetteurs, récepteurs, et détecteurs configurés avec des antennes ayant des directions de pointage de lobe principal différentes.

10. Émetteur-récepteur radio (130) selon l'une quelconque des revendications précédentes, agencé pour associer un signal radio reçu (RX) dans la bande de fréquences de réception (f2) à un signal radio rétro-diffusé détecté (DET) dans la bande de fréquences de transmission (f1).

11. Véhicule (110) comprenant l'émetteur-récepteur radio (130) selon l'une quelconque revendication précédente.

12. Véhicule selon la revendication 11, dans lequel l'émetteur-récepteur radio (130) est agencé sur une section inférieure (810) du véhicule (110).

13. Procédé dans un émetteur-récepteur radio (130) pour communiquer avec une ou plusieurs cibles équipées d'émetteur-récepteur (510), le procédé comprenant :
la transmission (S1) de signaux radio (TX) dans une bande de fréquence de transmission (f1), la transmission comprenant la transmission d'un signal de données dans le cas où une cible équipée d'un émetteur-récepteur (510) est présente et la transmission d'un signal factice dans le cas où une cible équipée d'un émetteur-récepteur (510) n'est pas présente,
la réception (S2) de signaux radio (RX) dans une bande de fréquences de réception (f2),
la détection (S3) des signaux radio rétro-diffusés (DET) dans la bande de fréquences de transmission (f1), et
l'estimation (S4) d'une distance vers au moins un objet cible (510, 610) sur la base des signaux radio rétro-diffusés détectés (DET).

14. Produit programme informatique (1100) comprenant un code de programme (1110) pour effectuer les étapes selon la revendication 13, lorsque ledit programme est exécuté sur un ordinateur.
